(19)

Europäisches
Patentamt
European
Patent Office
Office européen
des brevets

(11) **EP 1 859 894 A1**

(12) **EUROPEAN PATENT APPLICATION**
published in accordance with Art. 158(3) EPC

(43) Date of publication:
**28.11.2007 Bulletin 2007/48**

(51) Int Cl.:
***B23K 26/40*** (2006.01)

(21) Application number: **06714424.6**

(22) Date of filing: **23.02.2006**

(86) International application number:
**PCT/JP2006/303284**

(87) International publication number:
**WO 2006/093017 (08.09.2006 Gazette 2006/36)**

(84) Designated Contracting States:
**DE FR GB IT**

(30) Priority: **02.03.2005 JP 2005058180**

(71) Applicant: **Sumitomo Electric Industries, Ltd.**
**Osaka-shi, Osaka 541-0041 (JP)**

(72) Inventors:
 • **MISHIMA, Hidehiko,**
   **Sumitomo Electric Industr. Ltd.**
   **Osaka-shi, Osaka, 554-8511 (JP)**
 • **MASUDA, Yasuhito,**
   **Sumitomo Electric Industr. Ltd.**
   **Osaka-shi, Osaka, 554-8511 (JP)**
 • **OKUDA, Yasuhiro,**
   **Sumitomo Electric Industr. Ltd.**
   **Osaka-shi, Osaka, 554-8511 (JP)**

 • **WATATANI, Kenichi,**
   **Sumitomo Electric Industr. Ltd.**
   **Osaka-shi, Osaka, 554-8511 (JP)**
 • **SAKABE, Shuji,**
   **Institute of Chemical Research**
   **Uji-shi, Kyoto, 611-0111 (JP)**
 • **HASHIDA, Masaki,**
   **Institute of Chemical Research**
   **Uji-shi, Kyoto, 611-0111 (JP)**
 • **SHIMIZU, Seiji,**
   **Institute of Chemical Research**
   **Uji-shi, Kyoto, 611-0111 (JP)**

(74) Representative: **Cross, Rupert Edward Blount**
   **Boult Wade Tennant**
   **Verulam Gardens**
   **70 Gray's Inn Road**
   **London WC1X 8BT (GB)**

(54) **MATERIAL TREATMENT METHOD BY LASER ABLATION AND MATERIAL TREATED BY THE TREATMENT METHOD**

(57)   In order to easily control the laser pulse width and perform high-precision processing, the method for processing a material by laser ablation according to the present invention is **characterized in that** the material having a region of which a double logarithmic chart shows a linearly-shaped line with a gradient of not more than 0.5, when a relationship between laser pulse width and ablation threshold is represented in the logarithmic chart with a laser pulse width in picosecond plotted along the horizontal axis and an ablation threshold in $J/cm^2$ plotted along the vertical axis, is processed by the pulsed laser beam having the laser pulse width within the region.

FIG.2

**EP 1 859 894 A1**

## Description

TECHNICAL FIELD

The present invention relates to a method for processing a material by laser ablation and to the material processed by the processing method, in particular to a method for processing a material which has a region that receives minor adverse affects by the variation of pulse widths, using a laser beam having a pulse width within the region.

BACKGROUND ART

Conventionally it has been widely performed to direct a strong, locally-concentrated laser beam (light) onto a material to cause physical or chemical changes in the irradiated part of the material, for processing such as welding, fusion recrystallization, drilling, and cutting. When performing the above, a pulsed oscillation, in comparison with a continuous wave oscillation, is characterized in that controlling laser output light is possible by varying oscillation frequency, irradiating an object based on laser energy with considerable accuracy is possible because emission energy per pulse can be enhanced, and processing capability is high even when the average output is relatively low because a peak value of emission energy is high, and the like. Therefore, a pulsed laser beam is widely used for processing metals, living bodies, resins and the like.

Furthermore, the use of a laser beam having a small pulse width (short duration), especially a pulse width on the femtosecond ($10^{-15}$) time scale has been proposed for the purposes of locally concentrating laser ablation, decreasing adverse affects on peripheral areas adjacent to the processed spot, and inducing breakdown in a desired pattern in the interior or exterior of the material (International Publication No. 95/27587 pamphlet (see Patent Document 1)).
Patent Document 1: International Publication No. 95/27587 pamphlet

DISCLOSURE OF THE INVENTION

PROBLEMS TO BE SOLVED BY THE INVENTION

However, when using a laser beam having a small laser pulse width (short pulse duration), especially a femtosecond laser beam, it is considered that the chart showing the relationship between fluence breakdown threshold, i.e., ablation threshold, and laser pulse width, defines a curve and exhibits a rapid and distinct change in slope of the curve, as shown in Patent Document 1. This means that the ablation threshold largely varies with the varying laser pulse width. However it is difficult to precisely control the pulse width of the laser used for processing materials since the laser has a large output as well as high-density energy. Conventionally, therefore, when processing materials by a laser beam with a small laser pulse width, especially by a femtosecond laser beam, various measures were thought to be necessary in order to ensure high precision. An object of the present invention is to provide a method for processing a material by laser ablation in which controlling laser pulse width is easy and processing with high precision is efficiently performed, and a material of high precision that has been processed by the processing method.

MEANS FOR SOLVING THE PROBLEMS

The inventors have worked diligently in order to find better processing techniques by directing pulsed laser to a material while varying different kinds of parameters, such as the laser light wavelength, laser pulse width, distance between a work piece material and the focal point of the laser beam, and the like. Consequently, the inventors have found that there is a highly preferable relationship, for a specific material, for processing between the laser pulse width and breakdown threshold of the material through the ablation in a region of specific laser pulse widths, and completed the present invention.
The invention is a method for processing a material by laser ablation using a pulsed laser beam, characterized in that the material having a region of which a double logarithmic chart shows a linearly-shaped line with a gradient of not more than 0.5, when a relationship between a laser pulse width and an ablation threshold is represented in the double logarithmic chart with a laser pulse width in picosecond plotted along the horizontal axis and an ablation threshold in J/cm$^2$ plotted along the vertical axis, is processed by the pulsed laser beam having a laser pulse width within the region.
The laser pulse width is easily controlled according to the invention, since processing utilizing laser ablation is performed within the range for which the logarithmic chart representing the relationship of the ablation (ablation: ejection of neutral atoms and positively/negatively-charged ions of the material) threshold and laser pulse width exhibits a linearly-shaped line.
The ablation threshold largely varies with the varying laser pulse width even in the region where the line is linearly-shaped if the gradient of the chart (the angle with the horizontal axis) is large. According to the present invention, however, since the gradient of the chart is not more than 0.5, the adverse affects on the ablation breakdown caused by the variation of laser pulse width can be minimized and highly accurate processing can be performed steadily and efficiently, resulting in providing a material of high precision through the method of the present invention.
The term "linearly-shaped line" used herein does not necessarily mean that all the measurement points in the chart are on one straight line due to measurement errors, nonuniformity of the material, and the like. Therefore it includes such cases where some points are located above or below the straight line, or where the measurement points are located in a zonal region. It is noted that the unit in picosecond ($10^{-9}$ second) is used in principle herein for the laser pulse width since the number of digits may become too large if the unit in femtosecond ($10^{-15}$ second) is used instead.

An organic polymeric material may be primarily mentioned as the material which has the region of which the chart shows a linearly-shaped line with the gradient of not more than 0.5, though the invention is not limited thereto. That is, according to the present invention, by confirming whether or not the material corresponds to the region of which the chart shows a linearly-shaped line with a gradient of not more than 0.5 when the laser pulse width is represented by the horizontal axis in picosecond and ablation threshold is represented by the vertical axis in J/cm² in a double logarithmic chart, any material that has a region showing such a linearly-shaped line can be selected as an object material to be processed by the method of the present invention, including the material in which the relationship between fluence breakdown threshold and laser pulse width has been considered to exhibit a rapid and distinct change in slope. A high-precision processing can be efficiently performed onto the material selected in this way, without having to take other various measures, by using a pulsed laser having a laser pulse width within the region.

The material according to the present invention is characterized in that it is processed by the material processing method by means of the above-mentioned laser ablation. The material of high precision can be provided since it is processed by the above-mentioned processing method.

EFFECTS OF THE INVENTION

According to the invention, despite of some variation in laser pulse widths, the laser beam with processing energy suitable for the material to be irradiated can be directed stably onto the material. Thus, control of the laser pulse width is facilitated, allowing highly accurate and efficient processing.

BRIEF DESCRIPTION OF THE DRAWINGS

Fig. 1 shows the relationship between laser energy and processing diameter at the laser pulse width of 0.135 picoseconds.
Fig. 2 shows the relationship between the laser pulse width and ablation threshold.

BEST MODES FOR CARRYING OUT THE INVENTION

In the present embodiment, an expanded PTFE porous body, one of the organic polymeric materials which are considered to be difficult to process with high accuracy, was selected as a material for an experiment.

The expanded PTFE used for the experiment corresponds to the material manufactured by the method described in Japanese Patent Laying-Open No. 42-13560 and the like and is a sheet-shaped material of 60 $\mu$m in film thickness with porosity of 60% and an average pore diameter of 0.1 $\mu$m. The entire surface of this sheet was completely adhered to a sample holder by means of electrostatic force and then irradiation of a pulsed laser with laser energy varied for every laser pulse width was conducted. Since titanium sapphire can oscillate laser with the highest stability and intensity, the titanium/sapphire laser with a wavelength of 800nm was used. The experiment was conducted at the pulse widths of 0.135 picoseconds, 0.183 picoseconds, 0.189 picoseconds, 0.305 picoseconds, 0.7 picoseconds, and 400 picoseconds.

(Result of experiment)

(1) Shape of processing mark

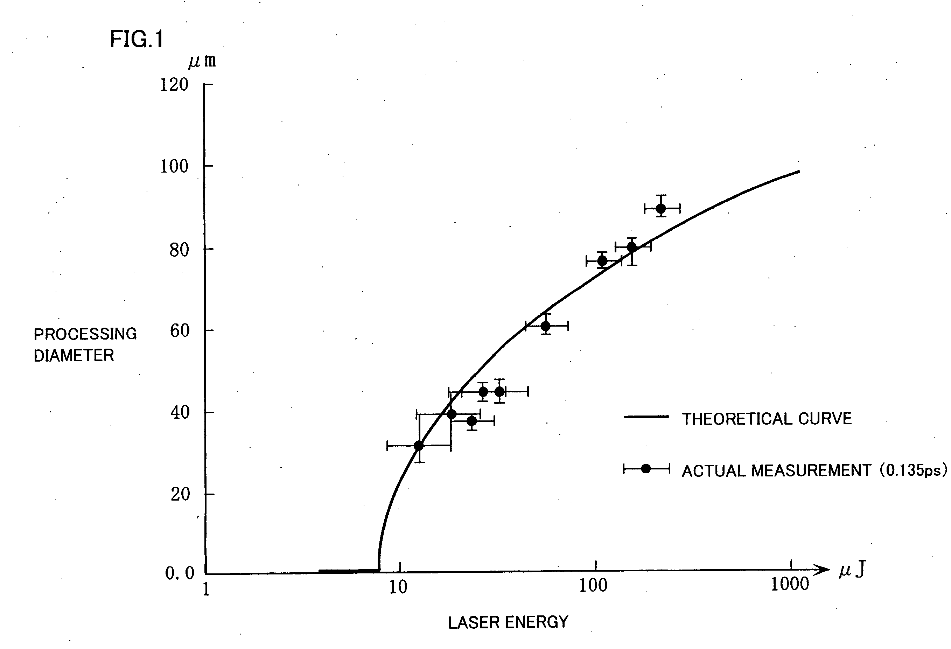

Fig. 1 shows the relationship of the processing diameter and laser energy when the laser was directed onto the material with the energy varying from 7.25 $\mu$J up to the vicinity of 212 $\mu$J, the pulse width of 0.135 picoseconds, the frequency of 10 Hz, and the laser spot diameter of 44 $\mu$m. Similarly in Fig. 1, a theoretical curve based on theoretical values of both the processing diameter and laser energy is shown for comparison. Note that the theoretical value is known to be expressed by the following formula when a space profile of the laser is of a gaussian configuration:

$$D = a \times \{ \ln (F/F_{th}) \}^{1/2}$$

Where D is a processing diameter, a is a laser spot diameter, F is laser energy, and $F_{th}$ is an ablation threshold value. Moreover, in Fig. 1, each point shows a measurement point, and the horizontal and vertical line segment for each point shows an error bar. As clearly seen from the result of Fig. 1, the values obtained by the experiment are close to the theoretical values, i.e., it was confirmed that the material used for the experiment has been processed with a high degree of accuracy.

(2) Relationship between laser pulse width and ablation threshold

The relationship between laser pulse width and ablation threshold was then evaluated. That is, referring to the fluence with the processing diameter D = 0 in Fig. 1, the ablation threshold is 7.5 $\mu$J at the laser pulse width of 0.135 picoseconds in the case of the material employed for the experiment, i.e., 0.5 J/cm² when expressed in fluence (energy density) was obtained as a result.

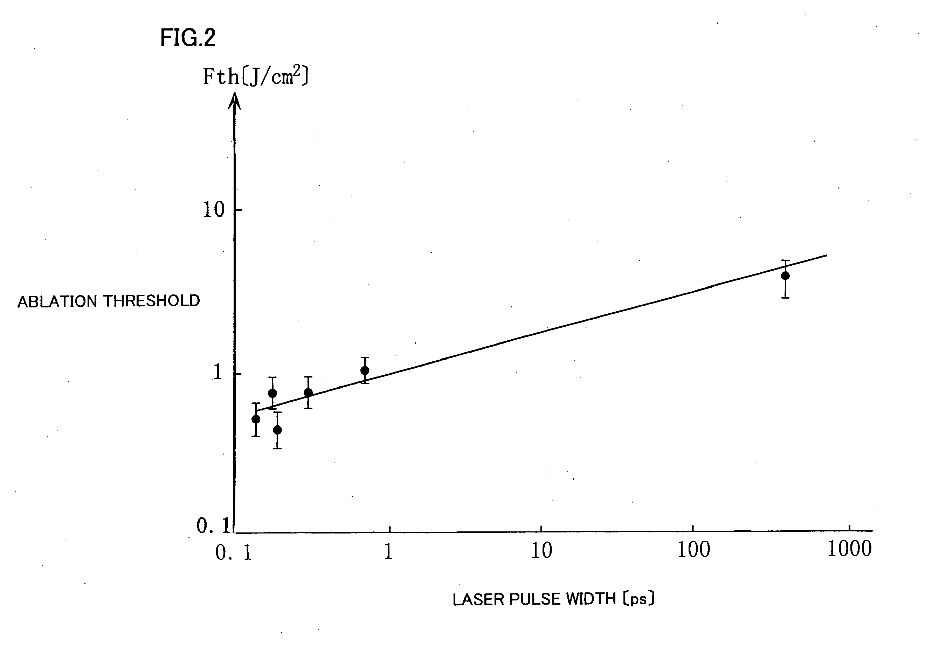

Subsequently, similar experiments were conducted on the above-mentioned materials with other laser pulse widths to confirm that a high-precision processing had been achieved by comparing the chart with the theoretical curve, as well as to determine the ablation threshold for every laser pulse width. The result is shown in Fig. 2. In Fig. 2, the horizontal axis indicates the laser pulse width in the logarithmic scale by the picosecond. Similarly, the vertical axis indicated the ablation threshold (energy density) in the logarithmic scale by the $J/cm^2$. Each point shows a measurement point, and a vertical line segment for each point shows an error bar.

Seen from Fig. 2, the gradient of the chart expressing the relationship between the laser pulse width and ablation threshold was about 0.26, i.e., less than 0.5, for the material used for the experiment, which was a moderate linear gradient Moreover, it was identified that there was no rapid and distinct change in slope of the relationship. That is, as for the material used for the experiment, it is understood that because of such a relationship between laser pulse width and ablation threshold, the ablation threshold receives minor adverse affects even if the laser pulse width varies. Therefore it becomes easy to control the laser pulse width and efficiently process the material with high accuracy. In view of the foregoing, the gradient of the chart expressing the relationship between laser pulse width and ablation threshold is preferably not more than 0.40, more preferably not more than 0.34.

The measurement points shown in Fig. 2 are for the pulse widths of 0.135 picoseconds, 0.183 picoseconds, 0.189 picoseconds, 0.305 picoseconds, 0.7 picoseconds and 400 picoseconds, and the ablation threshold for each pulse width is 0.50 $J/cm^2$, 0.75 $J/cm^2$, 0.44 $J/cm^2$, 0.75 $J/cm^2$, 0.99 $J/cm^2$, and 3.87 $J/cm^2$, respectively.

The embodiments disclosed herein should not be taken by way of limitation but illustrative in all respects. It is intended that the scope of the present invention be expressed by the terms of the appended claims, rather than by the above-mentioned description, and all the modifications within the meaning and scope of the claims and their equivalents be included.

**Claims**

1. A method for processing a material by laser ablation using a pulsed laser beam, wherein the material having a region of which a double logarithmic chart shows a linearly-shaped line with a gradient of not more than 0.5, when a relationship between a laser pulse width and an ablation threshold is represented in said double logarithmic chart with a laser pulse width in picosecond plotted along the horizontal axis and an ablation threshold in $J/cm^2$ plotted along the vertical axis, is processed by the pulsed laser beam having the laser pulse width within said region.

2. A material processed by the method for processing a material by laser ablation according to claim 1.

FIG.1

FIG.2

EP 1 859 894 A1

## INTERNATIONAL SEARCH REPORT

| | International application No. |
|---|---|
| | PCT/JP2006/303284 |

A. CLASSIFICATION OF SUBJECT MATTER
***B23K26/40***(2006.01)

According to International Patent Classification (IPC) or to both national classification and IPC

B. FIELDS SEARCHED

Minimum documentation searched (classification system followed by classification symbols)
***B23K26/40***(2006.01)

Documentation searched other than minimum documentation to the extent that such documents are included in the fields searched

| Jitsuyo Shinan Koho | 1922-1996 | Jitsuyo Shinan Toroku Koho | 1996-2006 |
|---|---|---|---|
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 9-511688 A (The Regents of the University of Michigan), 25 November, 1997 (25.11.97), Full text; all drawings & WO 95/27587 A | 1-2 |
| P,A | JP 2005-212013 A (Kyoto University), 11 August, 2005 (11.08.05), Detailed Explanation of the Invention; Par. Nos. [0076] to [0093]; Figs. 6 to 7 (Family: none) | 1-2 |

☒ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 May, 2006 (18.05.06) | 30 May, 2006 (30.05.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/303284 |

C (Continuation). DOCUMENTS CONSIDERED TO BE RELEVANT

| Category* | Citation of document, with indication, where appropriate, of the relevant passages | Relevant to claim No. |
| --- | --- | --- |
| T | Hidehiko MISHIMA, Yasuto MASUDA, Yasuhiro OKUDA, Masaki HASHIDA, Masaji SHIMIZU, Shuji SAKABE, "Chotan Pulsed Laser o Mochiita Fusso Jushi no Ablation Kako", The Institute of Electrical Engineers of Japan Kenkyukai Shiryo, Hikari·Ryoshi Device Kenkyukai, 04 March, 2005 (04.03.05) | 1-2 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9527587 A
- JP 4213560 A